Europäisches Patentamt

European Patent Office

Office européen des brevets

(11) Veröffentlichungsnummer: **0 239 758**
**A2**

(12) **EUROPÄISCHE PATENTANMELDUNG**

(21) Anmeldenummer: 87101932.9

(51) Int. Cl.4: **H04M 11/06**

(22) Anmeldetag: 12.02.87

(30) Priorität: 04.03.86 DE 3607016

(43) Veröffentlichungstag der Anmeldung:
07.10.87 Patentblatt 87/41

(84) Benannte Vertragsstaaten:
AT BE CH DE FR GB IT LI NL SE

(71) Anmelder: **Siemens Aktiengesellschaft Berlin
und München**
**Wittelsbacherplatz 2**
**D-8000 München 2(DE)**

(72) Erfinder: **Dieter, Georg, Dipl.-Ing**
**Reichtertshausen 60**
**D-8195 Egling 2(DE)**

(54) **Schaltungsanordnung zum Anschliessen eines Datengerätes an eine mit einer Fernsprecheinrichtung verbundene Übertragungsleitung.**

(57) An einer mit einer Fernsprecheinrichtung (Tel) über eine Bandsperre (Bs) verbundenen Übertragungsleitung (La′, Lb′), über die Fernsprechsignale in einem ersten Frequenzbereich übertragen werden, ist über einen Leitungsübertrager (Ü3) ein Datengerät (DG) angeschlossen, welches Datensignale in einem zweiten, oberhalb des ersten Frequenzbereiches liegenden Frequenzbereich aufzunehmen bzw. abzugeben vermag. Die Bandsperre (Bs) weist auf ihrer der Übertragungsleitung (La′, Lb′) zugewandten Seite einen Reihenschwingkreis (L3, L4, C6) auf, der in seinem dem zweiten Reihenschwing-Frequenzbereich entsprechenden Sperrbereich niederohmig ist.

# FIG 1

EP 0 239 758 A2

## Schaltungsanordnung zum Anschließen eines Datengerätes an eine mit einer Fernsprecheinrichtung verbundene Übertragungsleitung

Die Erfindung bezieht sich auf eine Schaltungsanordnung, wie sie im Oberbegriff des Anspruchs 1 angegeben ist.

Es sind bereits Schaltungsanordnungen zum Anschließen von Datengeräten an mit Fernsprecheinrichtungen verbundene Übertragungsleitungen bekannt (EP-A2-0 146 894). Bei diesen bekannten Schaltungsanordnungen sind die Datengeräte mit ihren Datensignale abgebenden und aufnehmenden Geräteteilen entweder über Bandpaßfilter oder über gesonderte Schalteinrichtungen bzw. Multiplexer und Demultiplexer an Fernsprechleitungen angeschlossen. Der damit verbundene schaltungstechnische Aufwand ist somit in jedem Falle relativ hoch.

Es sind ferner Schaltungsanordnungen zum Anschließen von Datensignale abgebenden und aufnehmenden Datengeräten an mit Fernsprecheinrichtungen verbundene Übertragungsleitungen bekannt (EP-A2-0 062 442; US-PS 4 443 662), die jeweils ein Filter mit einem vorbestimmten Durchlaßbereich umfassen, um Signale im Durchlaßbereich in die jeweiligen Übertragungsleitungen ein-oder aus diesen auszukoppeln. Ferner weisen die bekannten Schaltungsanordnungen jeweils einen Übertrager mit wenigstens einer ersten und wenigstens einer zweiten Wicklung auf. Das Filter schließt eine über die zumindest zweite Wicklung mit der Übertragungsleitung verbundene Parallelkapazität ein. Mit der wenigstens einen ersten Wicklung des jeweiligen Übertragers ist in Reihe eine Induktivität verbunden, die mit der Kapazität, so wie sie durch den Übertrager abgebildet ist, einen Reihenschwingkreis mit einer vorbestimmten Resonanzfrequenz außerhalb des Durchlaßbereiches bildet, wobei Signale im wesentlichen bei der vorbestimmten Resonanzfrequenz über die Induktivität und den Übertrager in die Zweidrahtleitung ein-oder aus dieser ausgekoppelt werden. Dies bedeutet, daß bei den zuletzt betrachteten bekannten Schaltungsanordnungen je Datengerät und im speziellen sogar je Einkoppelungs-und Auskoppelungsrichtung jeweils ein Reihenschwingkreis gebildet ist. Damit ist aber auch bei diesen bekannten Schaltungsanordnungen insgesamt ein relativ hoher - schaltungstechnischer Aufwand vorhanden.

Es ist schließlich auch schon eine Schaltungsanordnung bekannt (EP-Anmeldung 86 110 684.7), die zum Anschließen eines Datensignale abgebenden und/oder aufnehmenden Datengerätes an eine mit einer Fernsprecheinrichtung verbundene Übertragungsleitung dient, über die Fernsprechsignale in einem ersten Frequenzbereich und Datensignale in einem frequenzmäßig darüber liegenden zweiten Frequenzbereich übertragen werden. Dabei sind mit der Übertragungsleitung die Fernsprecheinrichtung und das Datengerät (DG) über eine Filteranordnung verbunden, zu der ein in der Übertragungsleitung liegendes Tiefpaßfilter gehört. Die Übertragungsleitung weist für die Übertragung der Fernsprechsignale einen ersten, relativ hohen Wellenwiderstand und für die Übertragung der Datensignale einen demgegenüber niedrigeren, zweiten Wellenwiderstand auf. Das Tiefpaßfilter ist so ausgebildet, daß es auf derjenigen, mit der Übertragungsleitung verbundenen Seite, welche der mit der Fernsprecheinrichtung verbundenen Seite gegenüberliegt, mit einem kapazitiven Abschluß versehen ist.

In die Übertragungsleitung ist ein Leitungsübertrager eingefügt, der über wenigstens eine Übertragerwicklung als Koppelwicklung mit dem Datengerät gekoppelt ist. Außerdem ist der Leitungsübertrager mit seiner jeweiligen Koppelwicklung direkt mit dem Datengerät verbunden, und der kapazitive Abschluß des Tiefpaßfilters ist so bemessen, daß dessen Wechselstromwiderstand in der Größenordnung des Wellenwiderstandes der Übertragungsleitung in dem genannten zweiten Frequenzbereich liegt, vorzugsweise jedoch kleiner ist als dieser Wellenwiderstand.

Der Erfindung liegt die Aufgabe zugrunde, eine Schaltungsanordnung der eingangs genannten Art so auszubilden, daß sie mit einer von einem Tiefpaßfilter verschiedenen Filteranordnung realisiert ist.

Gelöst wird die vorstehend aufgezeigte Aufgabe bei einer Schaltungsanordnung der eingangs genannten Art erfindungsgemäß dadurch, daß die Filteranordnung eine Bandsperre aufweist, die so ausgebildet ist, daß sie in ihrem dem zweiten Frequenzbereich entsprechenden Sperrbereich auf derjenigen, mit der Übertragungsleitung verbundenen Seite, welche mit der Fernsprecheinrichtung verbundenen Seite gegenüberliegt, mit einem Reihenschwingkreis versehen ist, daß in die Übertragungsleitung ein Leitungsübertrager eingefügt ist, der über wenigstens eine Übertragerwicklung mit dem Datengerät gekoppelt ist, und daß der Reihenschwingkreis der Bandsperre so bemessen ist, daß dessen Wechselstromwiderstand in dem genannten zweiten Frequenzbereich niederohmig ist.

Die Erfindung bringt den Vorteil mit sich, daß mit insgesamt relativ geringem schaltungstechnischen Aufwand eine besonders wirksame Filteranordnung zum Einsatz gelangt.

Zweckmäßigerweise ist der Leitungsübertrager als symmetrischer Leitungsübertrager ausgebildet. Dies bringt den Vorteil eines besonders einfachen Schaltungsaufbaus hinsichtlich der symmetrischen Leitungsbelastung mit sich.

Vorzugsweise ist der Leitungsübertrager als Teil einer Gabelschaltung ausgebildet, mit der ein Datensignalsender und ein Datensignalempfänger des Datengerätes verbunden sind. Hierdurch ergibt sich der Vorteil eines relativ geringen schaltungstechnischen Aufwands für einen störungsfreien Betrieb von Datensignalsender und Datensignalempfänger des Datengeräts.

Eine andere zweckmäßige Weiterbildung der vorliegenden Erfindung besteht darin, daß der in der jeweiligen Übertragungsleitungsader liegenden Wicklung des Leitungsübertragers ein Reihenschwingkreis parallel geschaltet ist, der auf eine Frequenz abgestimmt ist, mit der zur Fernsprecheinrichtung hin bzw. von dieser weg zu übertragende Sondersignale auftreten. Von dieser Maßnahme wird man in vorteilhafter Weise dann Gebrauch machen, wenn neben den Fernsprechsignalen zusätzliche Signale zu bzw. von der Fernsprecheinrichtung zu übertragen sind, wie beispielsweise 16-kHz-Gebührenzählsignale.

Anhand von Zeichnungen wird die Erfindung nachstehend beispielsweise näher erläutert.

FIG 1 zeigt in einem Blockdiagramm eine Schaltungsanordnung gemäß der Erfindung.

FIG 2 zeigt eine Modifikation der in FIG 1 dargestellten Schaltungsanordnung gemäß der Erfindung.

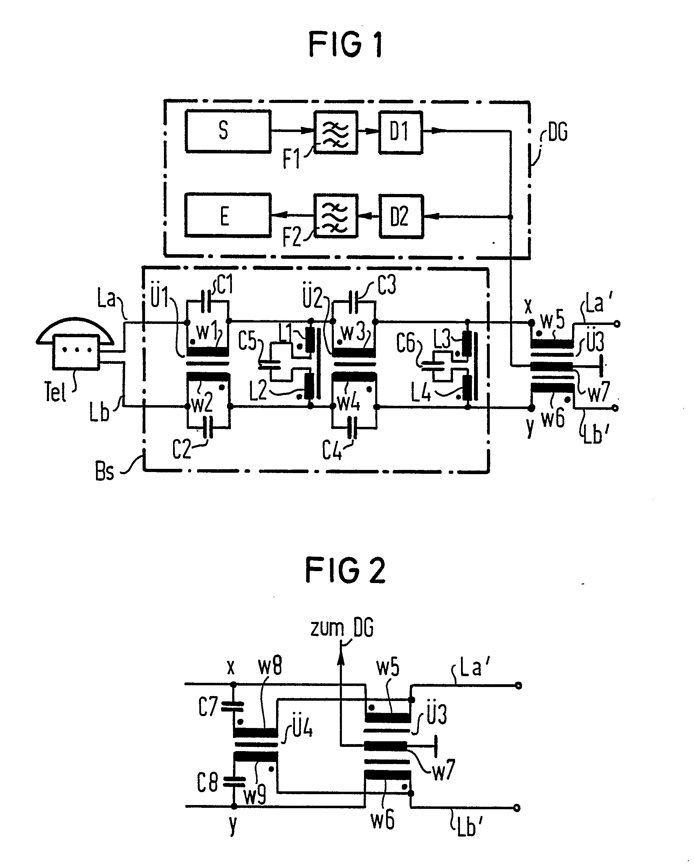

In FIG 1 ist in einem Blockdiagramm eine Schaltungsanordnung gemäß der Erfindung gezeigt. Zu dieser Schaltungs anordnung gehören eine Fernsprecheinrichtung Tel, bei der es sich um eine übliche Fernsprechstation handeln kann, und ein Datengerät DG, welches Datensignale abzugeben und aufzunehmen imstande ist.

Die Fernsprecheinrichtung Tel ist über die Adern La, Lb einer Anschluß-bzw. Übertragungsleitung mit einer Bandsperre Bs verbunden, welche in nachstehend noch näher zu beschreibender Weise mit den Adern La' bzw. Lb' einer Übertragungsleitung verbunden ist. Die Bandsperre Bs weist zwei jeweils als Spule mit einem einzigen Kern ausgeführte Übertrager Ü1 und Ü2 auf, die jeweils zwei Wicklungen w1, w2 bzw. w3, w4 aufweisen, von denen die jeweils einen Wicklungen direkt miteinander verbunden sind, nämlich die Wicklungen w1, w3 und die Wicklungen w2, w4. Den Wicklungen w1 bis w4 ist jeweils ein Kondensator der Kondensatoren C1, C2, C3, C4 parallel geschaltet. Zwischen den Verbindungen der Wicklungen w1, w3 und w2, w4 liegt ein Reihenschwingkreis, bestehend aus zwei auf einem gemeinsamen Kern befindlichen Spulen L1, L2 und aus einem zwischen diesen liegenden Kondensator C5. Auf der den Übertragungasleitungsadern La', Lb' zugewandten Seite weist die Bandsperre Bs ebenfalls einen Reihenschwingkreis auf, der aus zwei auf einem gemeinsamen Kern befindlichen Spulen L3, L4 und aus einem zwischen diesen liegenden Kondensator C6 besteht.

In die beiden Übertragungsleitungsadern La', Lb' ist gemäß FIG 1 ein symmetrisch ausgebildeter, als Spule mit einem einzigen Kern ausgeführter Leitungsübertrager Ü3 mit zwei Wicklungen w5, w6 eingefügt. Der Leitungsübertrager Ü3 weist noch eine Übertragerwicklung w7 auf, deren eines Ende auf einem definierten Potential, wie Masse-bzw. Erdpotential liegt und deren anderes Ende mit dem Datengerät DG verbunden ist.

Das Datengerät DG weist im vorliegenden Fall einen Datensignalsender S und einen Datensignalempfänger E auf. Der Datensignalsender S ist ausgangsseitig über ein Filter F1, bei dem es sich um ein Bandpaßfilter handeln kann, und ggfs. über eine Dämpfungseinrichtung D1 - die einstellbar sein kann - mit dem erwähnten Wicklungsende der Übertragerwicklung w7 verbunden. Der Datensignalempfänger E ist eingangsseitig über eine Filteranordnung F2, bei der es sich um ein Bandpaßfilter handeln kann, und ggfs. über eine Dämpfungseinrichtung D2 - die ebenfalls gegebenenfalls einstellbar sein kann - an dem gerade erwähnten Wicklungsende der Übertragerwicklung w7 angeschlossen. Die beiden Filter bzw. Filteranordnungen F1, F2 sind so ausgelegt, daß ihre in verschiedenen Frequenzbereichen liegenden Durchlaßfrequenzbänder im Sperrbereich der Badsperre Bs liegen. Dies bedeutet, daß die Übertragung der Fernsprechsignale über die Bandsperre Bs in einem ersten Frequenzbereich von beispielsweise 0,3 bis 3,4 kHz erfolgt und daß die Datensignalübertragung in einem zweiten, oberen Frequenzbereich von beispielsweise 50 bis 100 kHz erfolgt. In dem Fall, daß das Datengerät DG ein Modem ist, spricht man von einem sogenannten Data-Over-Voice-Modem.

Bei der vorstehend betrachteten, in FIG 1 dargestellten Schaltungsanordnung ist die Bandsperre Bs mit ihrem durch die Spulen L3, L4 und den Kondensator C6 gebildeten Reihenschwingkreis vorzugsweise so bemessen, daß dessen Wechselstromwiderstand im Sperrbereich der Bandsperre Bs so niederohmig ist, daß in diesem Fall die beiden Wicklungen W5, W6 des Übertragers Ü3 praktisch direkt miteinander verbunden sind. Dadurch gelangen keine Datensignale zu der Fernsprecheinrichtung Tel hin. Bezüglich der Fernsprechsignale ist die Situation zwar so, daß in Reihe zu der Bandsperre Bs - deren Durchlaßband gerade in dem Frequenzbereich liegt, in welchem Fernsprechsignale oder generell die Signale auftreten, die zu bzw. von der Fernsprecheinrichtung Tel zu übertragen sind - der Leitungsübertrager Ü3 liegt; die

3

Widerstandsverhältnisse sind jedoch hier noch als relativ günstig anzusehen, so daß die Fernsprechsignale ebenfalls praktisch kaum gedämpft werden. Als übliche Werte für die erwähnten Wellenwiderstände bzw. Eingangs-bzw. Ausgangswiderstände der Einrichtungen können folgende Werte berücksichtigt werden: Der Wellenwiderstand der Übertragungsleitung La', Lb' für die Übertragung von Fernsprechsignalen liegt bei 600 Ohm; der Wellenwiderstand der betreffenden Übertragungsleitung La', Lb' für die Übertragung von Datensignalen in dem betrachteten zweiten Frequenzbereich bzw.-band liegt bei 150 Ohm.

In FIG 2 ist eine Modifikation der in FIG 1 dargestellten Schaltungsanordnung gezeigt. Gemäß FIG 2 sind den Wicklungen w5, w6 des Leitungsübertragers Ü3 Reihenschwingkreise parallel geschaltet, bestehend aus den Windungen w8 bzw. w9 eines weiteren, als Spule mit einem einzigen Kern ausgeführten Übertragers Ü4 und aus Kondensatoren C7, C8. Diese Reihenschwingkreise liegen zwischen den Leitungsübertragungsadern La' bzw. Lb'und den Schaltungspunkten x bzw. y. Die betreffenden Reihenschwingkreise sind so bemessen, daß sie bei bestimmten Frequenzen in Resonanz sind, die von bzw. zu der Fernsprecheinrichtung Tel gemäß FIG 1 zu übertragen sind, wie beispielsweise 16-kHz-Gebührenzählsignale. Durch die erwähnten Reihenschwingkereise können somit die erwähnten Sondersignale mit noch geringerer Dämpfung als bei der in FIG 1 gezeigten Schaltungsanordnung zu bzw. von der Fernsprecheinrichtung Tel übertragen werden. Zugleich ist durch die betreffenden Reihenschwingkreise eine Erhöhung der Sperrdämpfung im Datensignalkanal für die erwähnten Sondersignale erreicht.

Abschließend sei noch angemerkt, daß die in den Zeichnungen bei den einzelnen Wicklungen der Übertrager vorgesehenen Punkte Wicklungsanfänge bzw. Wicklungsenden bei gleichem Wicklungssinn bezeichnen.


## Bezugszeichenliste

Bs............................... Bandsperre

C1, C2, C3, C4, C5, C6, C7, C8... Kondensator

D1, D2 .......................... Dämpfungseinrichtung

DG............................... Datengerät

E................................ Datensignalempfänger

F1............................... Filter

F2............................... Filteranordnung

La, Lb, La', Lb'................. Ader einer Übertragungsleitung

L1, L2, L3, L4................... Spule

S................................ Datensignalsender

Tel.............................. Fernsprecheinrichtung

Ü1, Ü2, Ü4....................... Übertrager

Ü3............................... Leitungsübertrager

w1, w2, w3, w4, w5, w6, w8, w9... Wicklung

w7............................... Übertragerwicklung

x, y............................. Schaltungspunkt


**Ansprüche**

1. Schaltungsanordnung zum Anschließen eines Datensignale abgebenden und/oder aufnehmenden Datengerätes (DG) an eine mit einer Fernsprecheinrichtung (Tel) verbundene Übertragungsleitung (La', Lb'), über die Fernsprechsignale in einem ersten Frequenzbereich und Datensignale in einem frequenzmäßig darüber liegenden zweiten Frequenzbereich übertragen werden und mit der die Fernsprecheinrichtung (Tel) und das Datengerät (DG) über eine Filteranordnung (TP) verbunden sind,
wobei die Übertragungsleitung (La', Lb') für die Übertragung der Fernsprechsignale einen ersten, relativ hohen Wellenwiderstand und für die Übertragung der Datensignale einen demgegenüber niedrigeren, zweiten Wellenwiderstand aufweist,

**dadurch gekennzeichnet,**

daß die Filteranordnung eine Bandsperre (Bs) aufweist, die so ausgebildet ist, daß sie in ihrem dem zweiten Frequenzbereich entsprechenden Sperrbereich auf derjenigen, mit der Übertragungsleitung (La', Lb') verbundenen Seite, welche der mit der Fernsprecheinrichtung (Tel) verbundenen Seite gegenüberliegt, mit einem Reihenschwingkreis (L3, L4, L6) (C7) versehen ist,

daß in die Übertragungsleitung ein Leitungsübertrager (Ü3) eingefügt ist, der über wenigstens eine Übertragerwicklung (w7) mit dem Datengerät (DG) gekoppelt ist,

und daß der Reihenschwingkreis (L3, L4, C6) der Bandsperre (Bs) so bemessen ist, daß dessen Wechselstromwiderstand in in dem genannten zweiten Frequenzbereich niederohmig ist.

2. Schaltungsanordnung nach Anspruch 1, **dadurch geknnzeichnet,** daß der Leitungsübertrager (Ü3) als symmetrischer Leitungsübertrager (Ü3) ausgebildet ist.

3. Schaltungsanordnung nach 1 oder 2, **dadurch gekennzeichnet**, daß der Leitungsübertrager (Ü3) als Teil einer Gabelschaltung ausgebildet ist, mit der ein Datensignalsender (S) und ein Datensignalempfänger (E) des Datengerätes (DG) verbunden ist.

4. Schaltungsanordnung nach einem der Ansprüche 1 bis 5, **dadurch gekennzeichnet,** daß der in der jeweiligen Übertragungsleitungsader (La', Lb') liegenden Wicklung (w5, w6) des Leitungsübertragers (Ü3) ein Reihenschwingkreis (w8, C8; w9, C9) parallel geschaltet ist, der auf eine Frequenz abgestimmt ist, mit der zur Fernsprecheinrichtung (Tel) hin zu übertragende Sondersignale auftreten.

# FIG 1

# FIG 2